Europäisches Patentamt

European Patent Office

Office européen des brevets

(11) Veröffentlichungsnummer: **0 498 951 A1**

# EUROPÄISCHE PATENTANMELDUNG

(21) Anmeldenummer: **91120730.6**

(51) Int. Cl.5: **B62D 5/04**

(22) Anmeldetag: **03.12.91**

(30) Priorität: **09.02.91 DE 4104050**
**29.06.91 DE 4121650**

(43) Veröffentlichungstag der Anmeldung:
**19.08.92 Patentblatt 92/34**

(84) Benannte Vertragsstaaten:
**DE FR GB IT**

(71) Anmelder: **ROBERT BOSCH GMBH**
**Postfach 30 02 20**
**W-7000 Stuttgart 30(DE)**

(72) Erfinder: **Schlagmueller, Walter**
**Frankenstrasse 39**
**W-7141 Schwieberdingen(DE)**
Erfinder: **Doerr, Ingrid, Dipl.-Ing.**
**Ottweilerstrasse 2**
**W-6600 Saarbrücken 2(DE)**
Erfinder: **Ahner, Peter, Dipl.-Ing.**
**Wiesenstrasse 25**
**W-7140 Ludwigsburg-Ossweil(DE)**

(54) **Elektromotorische Servolenkung.**

(57) Es wird eine elektromotorische Servolenkung vorgeschlagen, bei der in ein mit Öl gefülltes Kupplungsgehäuse (13) ein friction modifier eingegeben wird, um bei einer kupplungsspezifischen Reibpaarung Stahl/Papierbelag den Verlauf des Reibwertes (d $\mu$) in Abhängigkeit von der Gleitgeschwindigkeit (dv) zu beeinflussen.

Auf diese Weise werden durch Reibschwingungen in der Kupplung (7) entstehende Geräusche unterdrückt bzw. vermieden.

FIG.1

Rank Xerox (UK) Business Services

## Stand der Technik

Die Erfindung geht aus von einer elektromotorischen Servolenkung nach der Gattung des Hauptanspruchs. Eine derartige Servolenkung ist älter angemeldet durch die deutsche Anmeldung P 39 33 771.5.

Beim Gegenstand dieser älteren Anmeldung handelt es sich um eine Servolenkung für Kraftfahrzeuge fuhr den Parkiergeschwindigkeitsbereich (Park-Servo), mit einem Untersetzungsgetriebe zwischen einem Servomotor und der Lenksäule bzw. dem zur mechanischen Radverstellung weiterführenden Antrieb. Dabei wird mindestens eine Kupplungsbacke so angeordnet, daß sie eine Antriebsverbindung vom Servomotorantrieb zur Lenkgetriebeseite der Lenksäule dann herstellt, wenn bei manueller Momenteneinleitung am Lenkrad ein mit der Lenkradseite der Lenksäule verbundener Mitnehmer den erforderlichen Kupplungsanpreßdruck durch mechanische Einwirkung auf die mindestens eine Kupplungsbacke erzeugt, wobei unter der Kupplungseinwirkung stehende Zahnräder als Hohlzahnräder ausgebildet sind, die auf einer mit dem Antriebslenksäulenbereich drehfest verbundenen Kupplungsnabe gelagert sind.

Gemäß der Erfindung soll nun eine solche Servolenkung so verbessert werden, daß keine Reibschwingungen auftreten. Solche Reibschwingungen verursachen störende Geräusche, die besonders auffallend sind, weil, wegen der geringen Fahrgeschwindigkeit beim Parkieren, keine Windgeräusche auftreten.

Diese Aufgabe wird gemäß der Erfindung bei der gattungsgemäßen Servolenkung durch die kennzeichnenden Merkmale des Patentanspruchs gelöst.

## Zeichnung

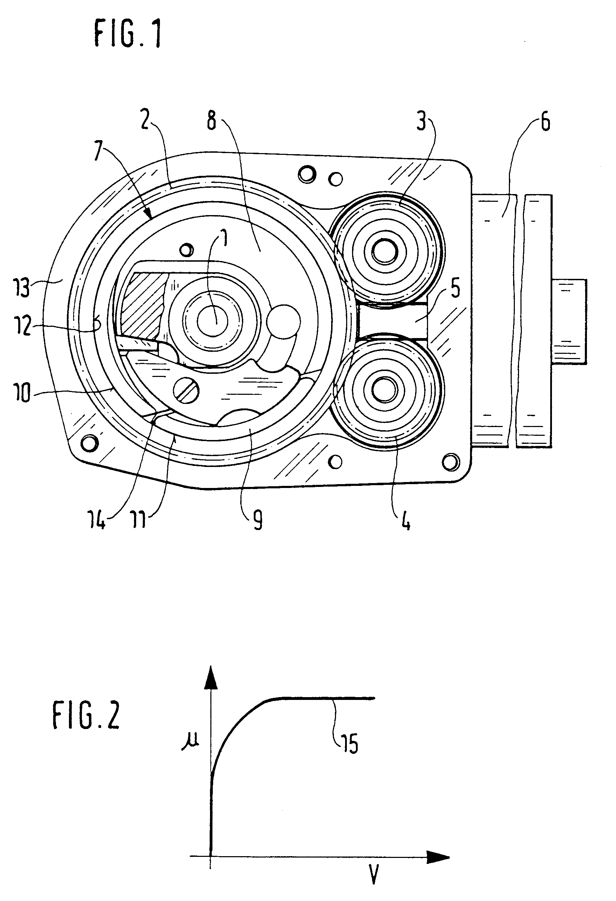

Ein Ausführungsbeispiel der Erfindung ist in der Zeichnung dargestellt und in der nachfolgenden Beschreibung näher erläutert. Es zeigen Figur 1 eine Getriebe-Kupplung einer durch einen Elektromotor hilfskraftbetriebenen Servolenkung und Figur 2 ein Diagramm über den Verlauf des Reibwertes $\mu$ in Abhängigkeit von der Gleitgeschwindigkeit des Kupplungsbelages auf seiner Gegenfläche.

## Beschreibung des Ausführungsbeispiels

Eine senkrecht die Darstellungsebene durchdringende Lenksäule 1 trägt ein hohles Zahnrad 2, das über zwei Zahnräder 3 und 4 kleineren Durchmessers von dem Ritzel 5 eines Elektromotors 6 antreibbar ist.

Die Verbindung der Lenksäule 1 mit dem Hohlzahnrad 2 ist über eine Kupplung 7 durchgeführt, die zwei feste Kupplungsbacken 8 und 9 aufweist, die mit Reibbelägen 10 und 11 bestückt sind. Die Reibbeläge 10 und 11 sind zur Zusammenarbeit mit einer Reibfläche 12 bestimmt, die innen im Hohlzahnrad 2 vorgesehen ist und die aus Stahl besteht, wogegen die Reibbeläge 10 und 11 mit einem Papierbelag versehen sind. Alle beweglichen Teile der Kupplung 7 sind in einem Gehäuse 13 angeordnet, das mit Öl gefüllt ist. Diesem Öl ist ein Reibverbindungsmittel 14 in Form eines handelsüblichen friction modifiers zugegeben. Gemäß der Erfindung wird bei der Reibpaarung Stahl gegen Papierbelag der Verlauf des Reibwertes $\mu$ in Abhängigkeit von der Gleitgeschwindigkeit durch das Reibverbindungsmittel 14 beeinflußt. Und zwar erfüllt der Verlauf des Reibwertes in Abhängigkeit von der Gleitgeschwindigkeit V die Bedingung, daß der Gradient des Reibwerts über der Gleitgeschwindigkeit größer ist als der negative Wert der dem System innewohnenden Eigendämpfung. Eine entsprechende Kurve 15 ist in Figur 2 dargestellt.

Mit einer derartigen Beeinflussung des Reibwertes ist es dann möglich, in der Kupplung 7 auftretende, durch Reibschwingungen verursachte Geräusche zu vermeiden oder zumindest so stark zu unterdrücken, daß sie nicht mehr als störend empfunden werden können.

Darüber hinaus besteht bei solchen Bauart der Vorteil, daß beim Zuschalten des Motors 6 (Gleitgeschwindigkeit 0) der Reibwert, ausgehend von einem niedrigen Wert, sich so zu einem höheren Wert hin verändert, daß der Einschaltdruck verhältnismäßig niedrig ist und damit ein weitgehend ruckfreies Zuschalten des Motors 6 ermöglicht ist.

Wie der waagrecht verlaufende Bereich der Kurve 15 erkennen läßt, ist der Reibwertverlauf unabhängig von der Gleitgeschwindigkeit V. Da bei kleinen Gleitgeschwindigkeiten der Reibwert des Belages stark abfällt, ist ein Abwürgen des Motors 6 vermieden, so daß sich dadurch ein automatischer Überlastungsschutz einstellt.

## Patentansprüche

1.  Elektromotorische Servolenkung für Kraftfahrzeuge, insbesondere für den Parkiergeschwindigkeitsbereich, mit einem Getriebe zwischen einem Servomotor und der Lenksäule bzw. dem zur mechanischen Radverstellung weiterführenden Abtrieb und mit mindestens einer Kupplungsbacke zur Herstellung einer Antriebsverbindung vom Servomotor zur Lenksäule bzw. Abtrieb, dadurch gekennzeichnet, daß zwischen der mindestens einen Kupplungsbacke (8, 9) und der Lenksäule (1) bzw. deren Abtrieb (Zahnrad 2), ein Reibverbindungsmittel (14) mit veränderlichem Reibwert vorgesehen ist.

2. Elektromotorische Servolenkung nach Anspruch 1, dadurch gekennzeichnet, daß das Reibverbindungsmittel (14) in Abhängigkeit von der Gleitgeschwindigkeit dv so beeinflußt ist, daß der Gradient des Reibwerts über der Gleitgeschwindigkeit größer ist als der negative Wert der dem System innewohnenden Eigendämpfung.

3. Elektromotorische Servolenkung nach Anspruch 1 oder 2, dadurch gekennzeichnet, daß das Reibverbindungsmittel (14) ein Schmieröl-Additiv (friction modifier) ist.

4. Elektromotorische Servolenkung nach einem der Ansprüche 1 bis 3, dadurch gekennzeichnet, daß das Reibverbindungsmittel (14) bei einer Gleitflächen-Paarung Stahl gegen Papierbelag verwendet ist.

# FIG.1

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 011 579 (CITROEN)<br>* Seite 1, Zeile 21 - Seite 2, Zeile 25 *<br>* Seite 7, Zeile 30 - Zeile 38; Ansprüche 1,2; Abbildungen 1-6 *<br>--- | 1,3 | B62D5/04 |
| A | FR-A-2 406 557 (ZAHNRADFABRIK FRIEDRICHSHAFEN)<br>* Seite 2, Zeile 18 - Seite 3, Zeile 5 *<br>* Seite 6, Zeile 17 - Seite 7, Zeile 34; Abbildungen 1-3 *<br>--- | 1 | |
| A | DE-A-3 925 214 (VOLKSWAGEN)<br>* das ganze Dokument *<br>--- | 1 | |
| A | EP-A-0 351 964 (EXXON CHEMICAL PATENTS)<br>* Seite 2, Zeile 1 - Seite 3, Zeile 28 *<br><br>----- | 1-3 | |
| | | | **RECHERCHIERTE SACHGEBIETE (Int. Cl.5)**<br><br>B62D<br>F16D<br>C10M |

Der vorliegende Recherchenbericht wurde für alle Patentansprüche erstellt

| Recherchenort | Abschlußdatum der Recherche | Prüfer |
|---|---|---|
| DEN HAAG | 11 MAI 1992 | GEYER J.L. |